# EUROPÄISCHE PATENTSCHRIFT

(11) **EP 1 547 228 B1**
(45) Veröffentlichungstag und Bekanntmachung des Hinweises auf die Patenterteilung: **30.12.2009**
(21) Anmeldenummer: 03750339.8
(22) Anmeldetag: 11.09.2003
(51) Int. Cl.: H02K 9/20

(54) **ELEKTRISCHE MASCHINE MIT EINER KÜHLEINRICHTUNG**
ELECTRICAL MACHINE WITH A COOLING DEVICE
MACHINE ELECTRIQUE A DISPOSITIF DE REFROIDISSEMENT

(30) Priorität: 24.09.2002 DE 10244428
(43) Veröffentlichungstag der Anmeldung: 29.06.2005
(73) Patentinhaber: SIEMENS AKTIENGESELLSCHAFT, 80333 München (DE)
(72) Erfinder: GROMOLL, Bernd, 91083 Baiersdorf (DE); HANDWERKER, Michael, 97653 Bischofsheim (DE); KRIEG, Olaf, 97616 Bad Neustadt (DE)
(86) Internationale Anmeldenummer: PCT/DE2003/003014
(87) Internationale Veröffentlichungsnummer: WO 2004/030183

(56) Entgegenhaltungen:
- DE-B- 2 951 859
- DE-C- 19 749 108
- US-A- 1 700 840
- US-A- 3 801 843

## Beschreibung

Die Erfindung bezieht sich auf eine elektrische Maschine mit
- einem drehbar gelagerten Läufer und einem zugeordneten, ortsfesten Ständer in einem Maschinengehäuse
   sowie
- einer Einrichtung zur Kühlung von Teilen innerhalb des Maschinengehäuses.
   Eine entsprechende Maschine ist der DE 42 42 123 A1 zu entnehmen.

In Maschinen aller Leistungsklassen, insbesondere aber mit höherer Leistung, wird eine erhebliche Wärme entwickelt, die im Hinblick auf eine verbesserte Maschineneffizienz und/oder höherer Lebensdauer mittels kühltechnischer Maßnahmen abzuführen ist. So ist z.B. für größere Maschinen wie z.B. Generatoren eine Kühlung von Ständer und Läufer mit H₂-Gas bekannt (vgl. z.B. "Proceedings of the American Power Conference", Vol. 39, Chicago 1977, Seiten 255 bis 269). Das H₂-Gas wird hierbei in einem gekapselten Gehäuse umgewälzt. Dabei sind nicht nur aufwendige Abdichtungsmaßnahmen erforderlich, sondern auch umfangreiche Sicherheitsmaßnahmen zu berücksichtigen.

Außerdem sind auch wassergekühlte Generatoren Standard, bei denen das Wasser in Kanälen zirkuliert, die sich insbesondere durch die sogenannten Ständerstäbe bzw. Ständerblechpakete erstrecken. Hierbei ist ein Einsatz von Pumpen erforderlich. Außerdem muss das Wasser aus Korrosionsschutzgründen konditioniert werden.

Darüber hinaus sind auch luftgekühlte Maschinen wie Motoren, insbesondere mit Leistungen unter 300 MVA, bekannt, bei denen eine Kühlung durch einen vergleichsweise großen Luftstrom erfolgt. Dieser Luftstrom kann insbesondere durch ein Netzwerk feiner Kanäle geleitet werden (vgl. die eingangs genannte DE 42 42 123 A1 oder die EP 0 823 370 A1). Bei einigen Maschinentypen trägt der Luftstrom selbst in Folge von Reibungsverlusten in den Kanälen zu einer unerwünschten Wärmeentwicklung bei.

Bei geschlossenen Maschinen, bei denen von außen kein Kältemittel zugeführt wird, das den elektrisch aktiven Teil der Maschine durchströmt, erfolgt eine Außenbelüftung, die, wie in der Zeitschrift "Drive and Control", Heft 1, 1992, Seiten 10 bis 12 beschrieben ist, zu einer ungleichmäßigen Temperaturverteilung im Motor führt. Bei solchen Maschinen werden im Allgemeinen auf der Nicht-Antriebsseite Lager und Wickelkopf der Ständerwicklung unter ihren thermischen Grenzen beansprucht. Hingegen treten auf der Antriebsseite höhere Temperaturen auf, die das antriebsseitige Lager und den antriebsseitigen Wickelkopf entsprechend thermisch beanspruchen.

Für diesen Maschinentyp ist es deshalb Stand der Technik, durch einen zusätzlichen Luftstrom die Temperaturunterschiede zwischen beiden Seiten auszugleichen und so für eine verbesserte Kühlung zu sorgen. Eine Möglichkeit besteht in einer Außenbelüftung des Maschinengehäuses, das auf seiner Außenseite mit Kühlrippen versehen ist, an denen eine axiale Luftströmung mittels eines Ventilators erzeugt wird, der am Kopfende auf der Nicht-Antriebsseite von der Welle angetrieben wird (vgl. z.B. DE 29 51 859 C2). Damit lässt sich zwar die Wärme aus den Ständerblechpaketen an das im Allgemeinen sie unmittelbar umschließenden Außengehäuse übertragen, nicht aber ausreichend aus dem Bereich der aus den Ständerblechpaketen stirnseitig herausragenden Wickelköpfen der Ständerwicklung. Man sieht sich deshalb vielfach gezwungen, auch im Inneren des Maschinengehäuses ein besonderes Kanalsystem zur Luftkühlung des Läufers und der Wickelköpfe vorzusehen (vgl. die eingangs genannte DE 42 42 123 A1).

Ferner erzeugt auch der Läufer zu einer Erwärmung führende Verluste, die teilweise durch Wärmeleitung über den ihn umgebenden Luftspalt zunächst an den Ständer übertragen und von dort gegebenenfalls an das damit verbundene Maschinenaußengehäuse und einen es kühlenden Luftstrom abgegeben werden. Der Luftspalt stellt jedoch dabei einem wesentlichen Wärmewiderstand dar. Ein weiterer Teil der Läuferverluste wird über die Motorwelle nach außen geleitet und erwärmt so die Wellenlager. Dies führt teilweise zu einer deutlichen Reduzierung der Lagerlebensdauer, da die mittlere Lagertemperatur bzw. die Temperaturdifferenz zwischen im Allgemeinen ringförmigen Lagerinnen- und außenteilen zu hoch ist.

Ein großer Teil dieser Verluste, insbesondere der Anteil der auf beiden Seiten des Ständers in den Gehäuseinnenraum ragenden Wickelköpfe, kann jedoch nur durch eine Konvektion an die Stirnseiten des Maschinengehäuses übertragen werden. Zur Verbesserung dieser Konvektion kann der Läufer stirnseitig mit Noppen oder Flügeln versehen sein, die eine undefinierte Verwirbelung des Luftstroms im Gehäuseinneren bewirken. Dabei darf jedoch nicht zuviel Wärme an die Stirnseiten des Maschinengehäuses übertragen werden, da die Temperatur der dort befindlichen Wellenlager einen vorgegebenen Höchstwert nicht überschreiten darf.

Die US 1 700 840 A1 offenbart eine elektrische Maschine mit Thermosyphon - Kühlung gemäß dem Oberbegriff des Anspruchs 1.

Aufgabe der vorliegenden Erfindung ist es deshalb, die Maschine mit den eingangs genannten Merkmalen dahingehend auszugestalten, dass eine effektive Kühlung, insbesondere auch zumindest einer der Wärme erzeugenden stirnseitigen Wickelköpfe, mit verhältnismäßig geringem Aufwand ermöglicht wird.

Diese Aufgabe wird erfindungsgemäß mit den in Anspruch 1 angegebenen Maßnahmen gelöst. Dementsprechend soll die Kühlenrichtung der Maschine mit den eingangs genannten Merkmalen unteranderem an wenigstens einer Stirnseite des Maschinengehäuses ein geschlossenes Leitungssystem enthalten, das zumindest
- einen außerhalb des Maschinengehäuses befindlichen Kondensator,
- einen innerhalb des Maschinengehäuses befindlichen Verdampfer
   und
- zwischen dem Kondensator und dem Verdampfer verlaufende Verbindungsrohre
   aufweist und in dem eine Zirkulation eines Kältemittels nach einem Thermosyphon-Effekt erfolgt.

Ein derartiges Thermosyphon-Leitungssystem weist wenigstens eine geschlossene Rohrleitung auf, die zwischen einem eine Wärmesenke bildenden Kaltbereich der Kühleinrichtung und den zu kühlenden Teilen der Maschine mit einem Gefälle verläuft. Das in diesem Leitungssystem befindliche Kältemittel (re)kondensiert dabei in dem auch als Kondensatorzone zu bezeichnenden Kaltbereich und gelangt von dort in den Bereich der zu kühlenden Maschinenteile, der sogenannten Verdampferzone, wo es sich unter Aufnahme der Verlustwärme erwärmt und dabei im Allgemeinen verdampft. Das so meistens verdampfte Kältemittel strömt dann innerhalb des Leitungssystems wieder zurück in den Bereich der Kondensatorzone. Die entsprechende Zirkulation des Kältemittels erfolgt demnach auf Grund eines sogenannten "Thermosyphon-Effektes" in einem Naturumlauf mit Sieden und Verdampfen. Das Thermosyphon-Leitungssystem ist mit einem handelsüblichen Kältemittel gefüllt. Das in ihm vorhandene Flüssigkeits-Dampf- Gemisch ist gesättigt, d.h. der Druck in dem Leitungssytem wird durch die tiefste Temperatur bestimmt, mit der das Leitungssystem thermisch in Kontakt ist, hier also durch die Temperatur, bei der die aufgenommene Wärme am Kondensator abgeführt wird. Werden die Wärmeverluste der Maschine auf den Verdampfer übertragen, so verdampft das Kältemitte sofort, da es sich im Siedezustand befindet. Voraussetzung dabei ist, dass sich der Kondensator auf vergleichsweise niedrigerem Temperaturniveau befindet als der Verdampfer. Dadurch wird ein Kreislauf in Gang gesetzt, der auf Grund der Dichteunterschiede zwischen Dampf und Flüssigkeit des Kältemittels nur durch die Schwerkraft aufrecht erhalten wird. Dazu ist erforderlich, dass der Kondensator oberhalb oder zumindest auf gleicher Höhe angeordnet ist wie der Verdampfer. Gemäß der Erfindung ist also dieses an sich bekannte Prinzip auf die Kühlung mindestens eines der stirnseitigen Teile der Maschine, vorzugsweise auf mindestens einen der dort befindlichen Wickelköpfe der Ständerwicklung, angewandt.

Durch den Einsatz eines solchen Thermosyphon-Leitungssystems, bei dem durch den inneren Wärmetransport eines Kältemittels über Phasenübergänge eine sehr hohe effektive Wärmeleitfähigkeit gewährleistet ist, kann so die Verlustwärme quasi direkt von der jeweiligen Wärmequelle innerhalb des Maschinengehäuses nach außen z.B. an Kühlluft oder eine andere Wärmesenke wie beispielweise Wasser, das bei einem Schiffsmotor Meerwasser sein kann, abgeführt werden. Dabei müssen vorteilhaft keine größeren thermischen Widerstände wie Gehäusewände oder Luftspalte überwunden werden. Verbunden damit ist eine vorteilhafte Verringerung der thermischen Belastung anderer Maschinenkomponenten wie z.B. der Lager. Der Thermosyphon-Teil der Kühleinrichtung besitzt keine beweglichen Teile, ist wartungsfrei und selbstregelnd.

Gegenüber rein luftgekühlten Maschinen wird durch teilweise direkte Wärmeabfuhr am Entstehungsort der Wärmeverluste über Thermosyphons eine Reduzierung des Luftvolumenstroms ermöglicht. Damit wird auch eine Senkung der durch den Luftstrom erzeugten Wärmeentwicklung erreicht, die eine weitere Reduzierung des Luftvolumens ermöglicht. Es ergibt sich so eine höhere Maschineneffizienz und dementsprechende Einssparungen bei Produktionskosten, insbesondere bei der Wicklung und beim Blechpaket des Ständers, sofern keine Leistungssteigerung bei entsprechendem Wirkungsgradniveau angestrebt wird. Außerdem führt eine Reduzierung des Luftvolumenstromes zu einer verringerten Geräuschentwicklung.

Der Verdampfer steht in unmittelbarer warmeleitender Verbindung mit wenigstens einem der stirn-seitigen Wickelköpfe einer Ständerwicklung. Auf diese Weise lässt sich die an dem jeweiligen Wickelkopf erzeugte Wärme unmittelbar an das Kältemittel in dem Thermosyphon-Leitungssystem abführen, ohne dass eine unzulässige Erwärmung von weiteren Maschinenteilen wie insbesondere einem jeweils zugeordneten Lager zu befürchten ist.

Vorteilhafte Ausgestaltungen der erfindungsgemäßen Maschine gehen aus den abhängigen Ansprüchen hervor.

So kann an den beiden Stirnseiten innerhalb des Maschinengehäuses jeweils ein Thermosyphon-Leitungssystem vorgesehen sein, um so mittels deren Verdampfer eine weitgehend gleichmäßige Kühlung insbesondere der Wickelköpfe von Ständerwicklungsteilen und/oder von Wellenlagern zu gewährleisten.

Stattdessen kann an beiden Stirnseiten innerhalb des Maschinengehäuses jeweils ein Verdampfer eines gemeinsamen Thermosyphon-Leitungssystems vorgesehen sein. Ein entsprechendes Thermosyphon-Leitungssystem zeichnet sich durch seine geringere Anzahl von Teilen aus.

Vorteilhaft sind/ist der Verdampfer und/oder der Kondensator mit Maßnahmen zur Vergrößerung der Wärmeübertragungsfläche ausgestattet. Auf diese Weise ist eine gute Wärmeübertragung durch Konvektion an den Verdampfer zu gewährleisten. Entsprechende Maßnahmen können insbesondere Kühlrippen oder Kühlschlangen sein.

Auch kann der Verdampfer vorteilhaft in einen stirnseitigen Gehäusedeckel des Maschinengehäuses integriert oder mit diesem anderweitig wärmeleitend verbunden sein. Da dieser Gehäusedeckel im Allgemeinen in wärmeleitender Verbindung mit einem Lager steht, lässt sich so eine unzulässige Erwärmung des Lagers leicht verhindern.

Darüber hinaus kann die Kühleinrichtung der Maschine zusätzlich Strömungswege für eine Luftkühlung aufweisen. Dabei ist insbesondere eine Außenkühlung des Maschinengehäuses mittels eines Luftstromes vorzusehen, der von einem stirnseitigen Gebläse hervorgerufen wird. Neben einer Eigenbelüftung durch die Maschine selbst ist selbstverständlich auch eine Fremdbelüftung möglich. Besonders vorteilhaft kann in diesem Luftstrom wenigstens ein Kondensator eines Thermosyphon-Leitungssystems angeordnet sein.

Weitere vorteilhafte Ausgestaltungen der erfindungsgemäßen Maschine gehen aus den vorstehend nicht angesprochenen abhängigen Ansprüchen hervor.

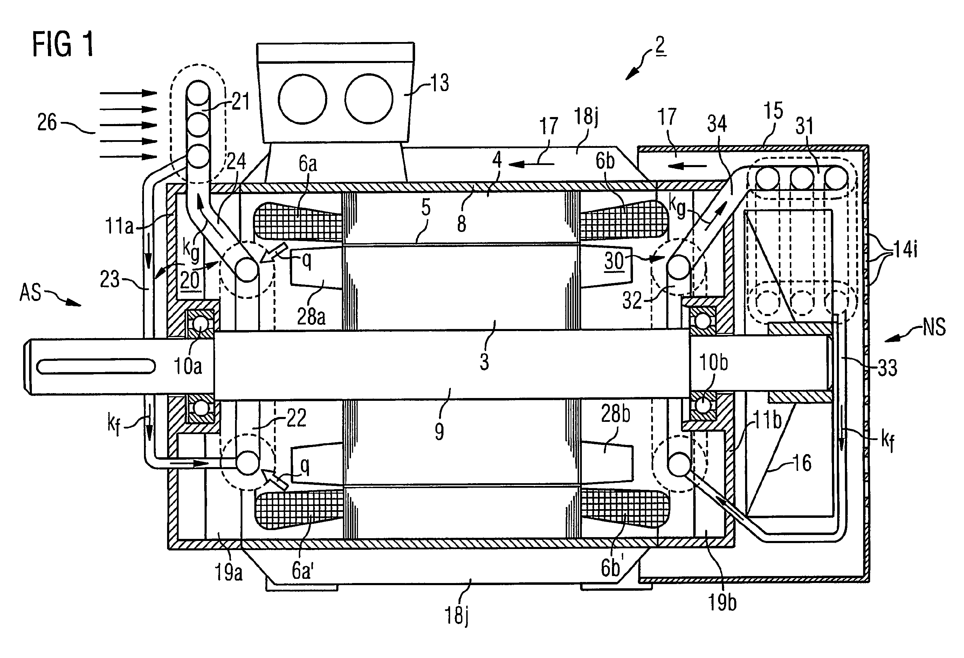

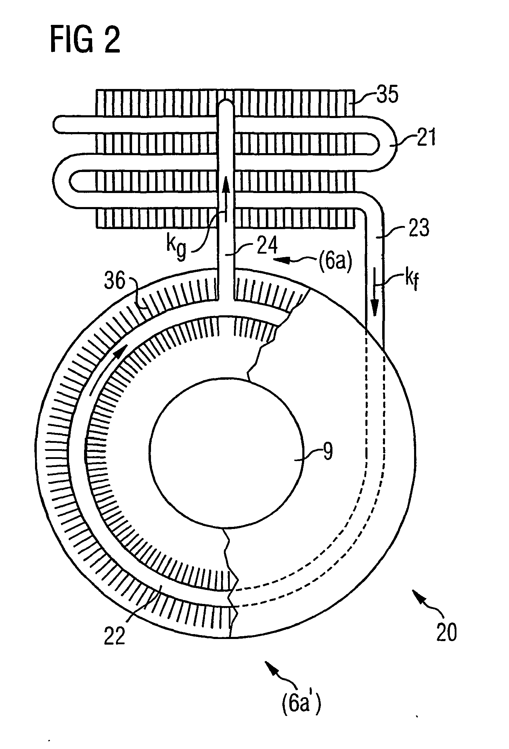

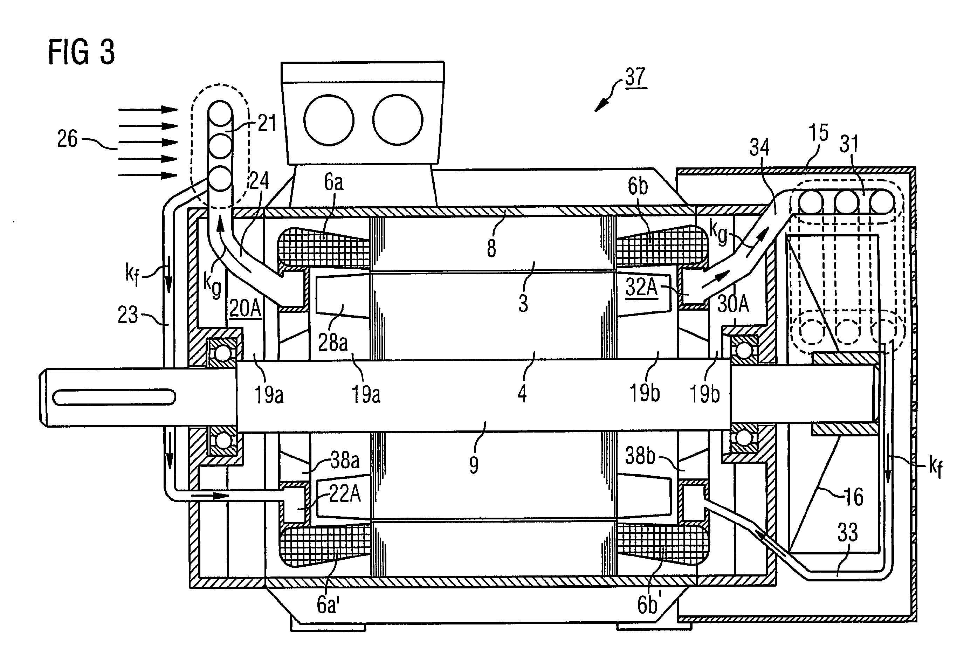

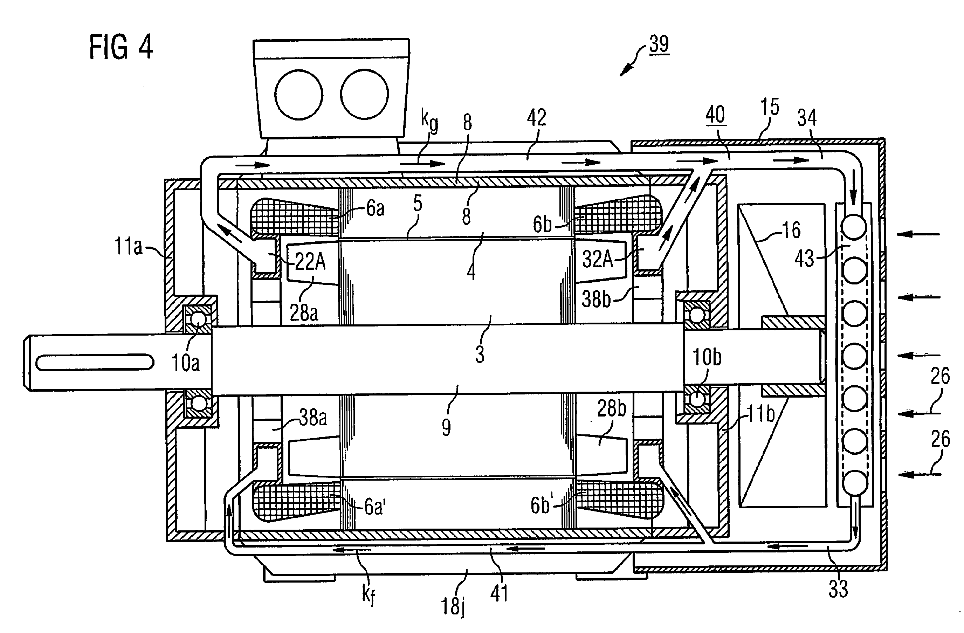

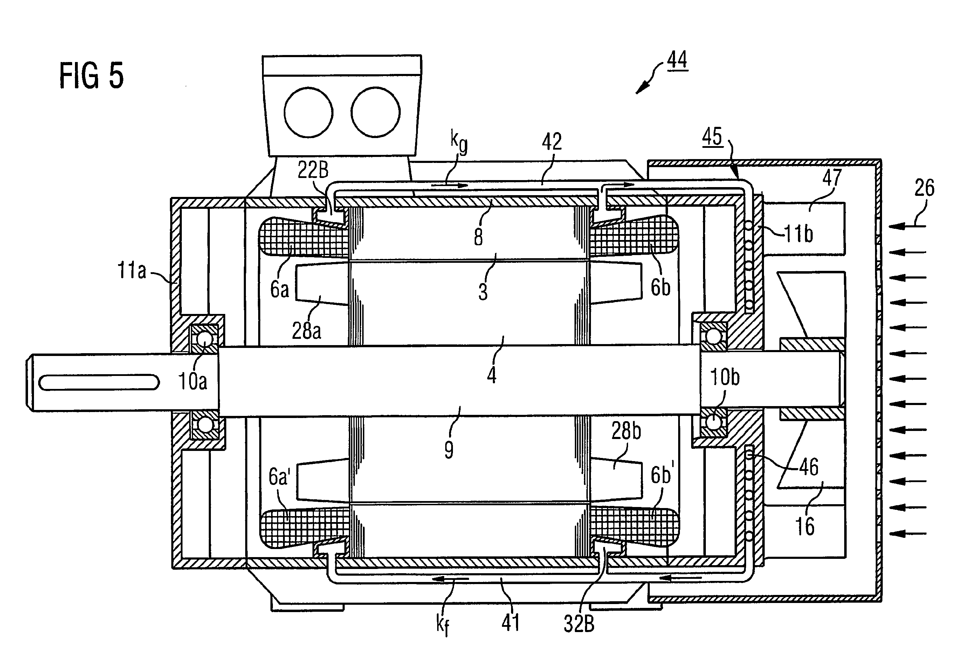

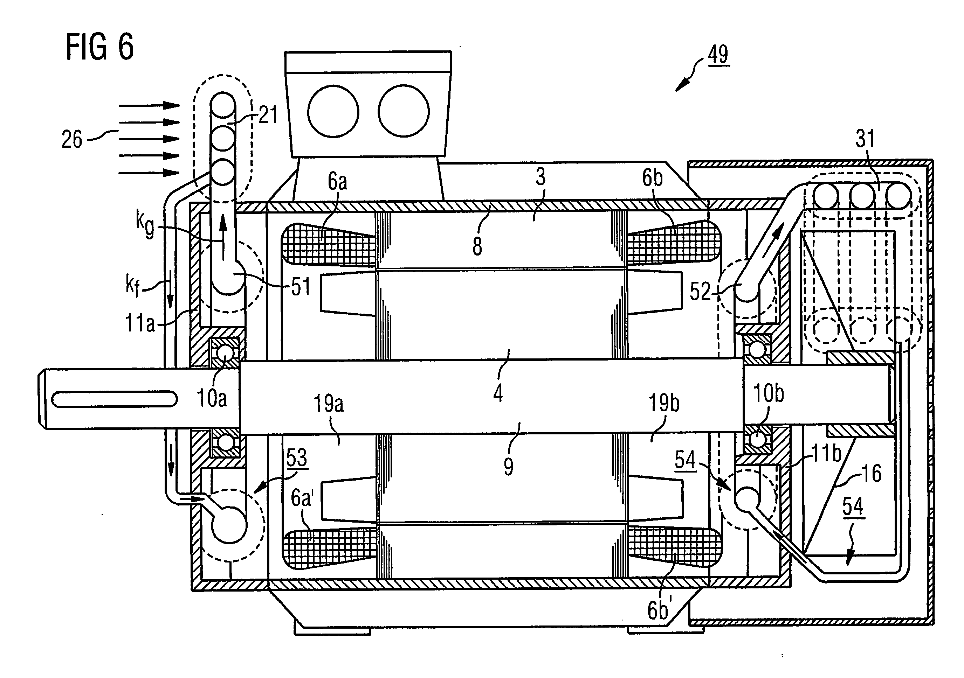

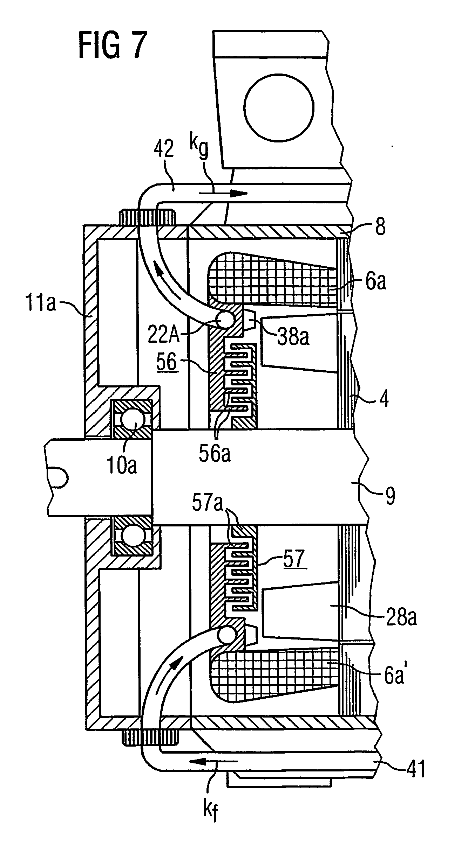

Nachfolgend werden unter anderem bevorzugte Ausführungsbeispiele von elektrischen Maschinen nach der Erfindung an Hand der Zeichnung noch weiter erläutert. Dabei zeigen jeweils schematisch
- deren Figur 1: eine Maschine mit einer Integration zweier Thermosyphon-Leitungssysteme im Gehäuseinnenraum der Maschine,
- deren Figur 2: eine andere Ansicht eines dieser ThermosyphonLeitungssysteme ,
- deren Figur 3: eine weitere Maschine mit zwei Thermosyphon-Leitungssystemen auf beiden Seiten,
- deren Figur 4: eine andere Maschine mit nur einem Thermosyphon-Leitungssystem für beide Seiten,
- deren Figur 5: die Maschine nach Figur 4 mit einer anderen Ausführungsform ihres Thermosyphon-Leitungssystems,
und
- deren Figur 6: eine weitere Maschine mit einer Integration von Thermosyphon-Leitungssystemen in ihre Gehäusedeckel
- deren Figur 7: einen Ausschnitt aus der Maschine nach Figur 4 mit einer thermischen Ankopplung der Welle an ein Thermosyphon-Leitungssystem.

Dabei sind,in den Figuren sich entsprechende Teile jeweils mit denselben Bezugszeichen versehen.

Bei der elektrischen Maschine nach der Erfindung wird von an sich bekannten Typen des mittleren oder höheren Leistungsbereiches wie z.B. von Generatoren oder Niederspannungsmotoren ausgegangen. In den Figuren sind nur die für die Erfindung wesentlichen Teile der Maschine erläutert. Alle übrigen Teile entsprechen weitgehend denen von Norm- oder Sondermotoren der Firma Siemens AG (DE), beispielsweise denen eines zwei- oder vierpoligen Niederspannungsmotors vom Typ 1LA5 183. Bei dieser bekannten Maschine wird im Gegensatz zu der aus der eingangs genannten DE 42 42 132 A1 zu entnehmenden Maschine auf besondere Läuferkühlkanäle verzichtet. Selbstverständlich können solche Kanäle auch für erfindungsgemäß ausgeführte Maschinen zusätzlich vorgesehen werden.

Im Längsschnitt der Figur 1 (nicht teil der Erfindung) sind bezeichnet mit 2 die elektrische Maschine, mit 3 ein Läuferblechpaket, und mit 4 ein Ständerblechpaket, das das Läuferblechpaket unter Einhaltung eines engen Luftspalts 5 umschließt. Mit 6a, 6a' und 6b, 6b' sind zwei stirnseitige Wickelköpfe einer Ständerwicklung bezeichnet, wobei gemäß dem ausgewählten Ausführungsbeispiel auf jeder Seite ein ein- oder mehrteiliger Wickelkopf angenommen sei, dessen unterer, auf kälterem Niveau liegender Teil jeweils mit dem eingestrichene Bezugszeichen versehen ist. Ferner sind mit 8 ein an das Ständerblechpaket 4 unmittelbar angrenzendes Maschinengehäuse, mit 9 eine Läuferwelle, mit 10a und 10b Lager, mit 11a und 11b stirnseitige Lagerschilde bzw. Gehäusedeckel, mit 13 ein Anschlusskasten zum elektrischen Anschluss der Ständerwicklung, mit AS die Antriebsseite der Maschine und mit NS die Nicht-Antriebsseite der Maschine. Auf dieser Nicht-Antriebsseite NS befindet sich in einem mit stirnseitigen Lüftungsöffnungen 14i versehenen Gebläsegehäuse 15, das seitlich an dem Maschinengehäuse 8 befestigt ist, ein auf der Welle 9 befestigtes Lüfterrad 16. Mit diesem Lüfterrad wird nach Art eines Ventilators ein axialer Luftstrom, der durch gepfeilte Linien 17 angedeutet sein soll, längs der Außenseite des Maschinengehäuses 8 erzeugt. Zur Vergrößerung der Wärmeaustauschfläche ist deshalb das Maschinengehäuse an seiner Außenseite in bekannter Weise mit in der Figur nicht näher ausgeführten Längsrippen 18j ausgestattet.

Selbstverständlich ist statt einer solchen Außenkühlung des Maschinengehäuses 8 auch eine andere Kühlart wie z.B. eine Fremdbelüftung möglich.

Bei der in Figur 1 gezeigten Kühleinrichtung ist zusätzlich zu der Außenluftkühlung des Maschinengehäuses 8 mittels des axialen Luftstroms 17 eine Kühlung in wenigstens einem der stirnseitigen Gehäuseinnenräume 19a, 19b des Maschinengehäuses 8 vorgesehen. Hierzu ist mindestens ein geschlossenes, allgemein mit 20 bezeichnetes, ortsfestes Leitungssystem so ausgebildet, dass in ihm ein Kältemittel unter Ausnutzung eines sogenannten Thermosyphon-Effektes zirkulieren kann (vgl. auch DE 41 08 981 A1 oder DE 100 18 169 A1). Bei der Ausführungsform nach Figur 1 umfasst das Leitungssystem 20 wenigstens einen Kondensator 21 in einer Kondensatorzone, einen Verdampfer 22 in einer Verdampferzone sowie zwischen dem Kondensator 21 und dem Verdampfer 22 verlaufende Verbindungsrohre 23 und 24. Diese Verbindungsrohre führen durch die jeweilige Gehäusewand und können auch flexibel ausgeführt sein, um eine Lageunabhängigkeit der Motormontage zu gewährleisten. Die erforderliche Kälteleistung wird an dem Kondensator 21 bereitgestellt. Dieser kann in Form einer Kühlschlange ausgebildet sein, die z.B. einem kühlenden Luftstrom 26 einer Kühlluft ausgesetzt wird. Hierzu kann ein eigener Lüfter vorgesehen sein. Selbstverständlich ist auch ein anderes Kühlmedium wie z.B. Wasser geeignet, so dass dann der Kondensator Teil eines Wasserwärmetauschers ist, wie er z.B. für Schiffsantriebe vorgesehen werden kann.

In den Kühlschlangen des Kondensators 21 kondensiert dann ein Kältemittel und gelangt auf Grund eines geodätischen Gefälles zwischen dem Kondensator 21 und dem Verdampfer 22 in flüssiger, mit k_{f} bezeichneter Form über das Verbindungsrohr 23 in den Verdampfer 22. Dort erwärmt sich das Kältemittel, beispielsweise unter zumindest teilweiser Verdampfung, indem es im Verdampferbereich befindliche Wärme aufnimmt. Das somit gasförmige, mit k_{g} bezeichnete Kältemittel strömt dann aus diesem Verdampfer über das Verbindungsrohr 24 zurück in den Kondensator 21, wo es in dessen Kühlschlangen (re)kondensiert wird. Ein derartiger Naturumlauf mit Sieden und Verdampfen bildet das Thermosyphon-Prinzip.

Als Kältemittel kommen praktisch alle in der Kältetechnik üblichen Kühlmedien in Frage. So können je nach Erfordernis des zu wählenden Temperaturniveaus verflüssigbare Gase wie Propan, Butan, Aceton oder Neon oder in der Standardkältetechnik verwendete azeotrope Mischungen verwendet werden.

Figur 2 zeigt in einem Querschnitt diese Thermosyphon-Leitungssystem 20 näher. Wie aus dieser Figur ersichtlich ist, können sowohl der Kondensator 21 als auch der Verdampfer mit Maßnahmen zur Vergrößerung ihrer Wärmeübertragungsfläche ausgestattet sein. So lässt sich z.B. der Kondensator 21 aus oder mit einem Rippenkörper 35 mit Kühlrippen ausbilden. In entsprechender Weise kann auch der Verdampfer 22 aus einem Rippenrohr mit Rippen 36 hergestellt werden.

Bei der in Figur 1 dargestellten Ausführungsform der Maschine 2 befindet sich der die Läuferwicklung 9 ringförmig umschließende Verdampfer 22 innerhalb des stirnseitigen Innenraums 19a des Maschinengehäuses 8 vor dem Läuferblechpaket 3 in der Nähe des dort vorhandenen Wickelkopfs 6a, 6a' der Ständerwicklung. Der Verdampfer kann so von dem Läufer und dem Ständer erzeugte Wärme gut aufnehmen. Die von dem Wickelkopf 6a, 6a' abgegebene Wärmemenge soll dabei durch mit q bezeichnete gepfeilte Linien angedeutet sein. Da hier die Wärme indirekt über erzwungene Konvektion an den Verdampfer übertragen wird, sieht man zur Verbesserung der Wärmeübertragung zweckmäßigerweise noch ein an dem Läufer bzw. dessen Blechpaket 3 stirnseitig angebrachtes, somit mitrotierendes Schaufelrad 28a vor, wie es z.B. von Turbogeneratoren her bekannt ist. Auf diese Weise lässt sich die in dem stirnseitigen Teil 19a des Gehäuseinnenraums befindliche Luft verwirbeln. Gleichzeitig schirmt aber der Verdampfer 22 das Lager 10a gegenüber einer unzulässigen Wärmeeinleitung ab.

Wie aus Figur 1 ferner zu entnehmen ist, kann vorteilhaft auch auf der Nicht-Antriebsseite NS ein entsprechendes Thermosyphon-Leitungssystem 30 vorgesehen sein. Dessen spiralförmiger Kondensator 31 befindet sich im Luftstrom des Lüfterrades 16 innerhalb des Gebläsegehäuses 15, während sein Verdampfer 32 in dem stirnseitigen Innenraumteil 19b des Maschinengehäuses 8 zur Kühlung insbesondere der Wickelköpfe 6b und 6b' angeordnet ist. Ein stirnseitiges Schaufelrad 28b an dem Läuferblechpaket 3 dient zur Umwirbelung der Luft in diesem Teilraum 19b.

Bei der Maschine nach Figur 1 wurde davon ausgegangen, dass sich der mindestens eine Verdampfer 22 in dem stirnseitigen Innenraum 19a des Maschinengehäuses 8 befindet und eine Wärmeaufnahme von den Wärmequellen wie z.B. von dem Wickelkopf 6a, 6a' sowie von weiteren Teilen wie dem Läuferblechpaket 3 lediglich über die in diesem Innenraum befindliche Luft erfolgt. Erfindungsgemäß ist eine unmittelbare thermische Verbindung zwischen einem entsprechenden Verdampfer und einem dieser zu kühlenden Teile vorgesehen. Figur 3 zeigt eine solche Ausführungsform einer Maschine 37. Deren stirnseitigen Thermosyphon-Leitungssysteme 20A bzw. 30A weisen jeweils beide einen Verdampfer 22A bzw. 32A auf, die direkt an den jeweiligen Wickelköpfen 6a, 6a' bzw. 6b, 6b' anliegen. Auf diese Weise können die Verdampfer die an diesen Teilen abgegebenen Wärmemengen direkt über eine Wärmeleitungsverbindung aufnehmen. Die Verdampfer 22A und 32A können zusätzlich noch mit Kühlrippen 38a bzw. 38b ausgestattet sein, um so eine Wärmeaufnahme aus dem jeweiligen Gehäuseinnenraum 19a bzw. 19b zu verbessern.

Bei der in Figur 3 gezeigten Ausführungsform einer Maschine 37 wurde davon ausgegangen, dass auf jeder Seite für die dort vorhandenen Wickelköpfe 6a, 6a' und 6b, 6b' ein eigenes Thermosyphon-Leitungssystem 20A bzw. 30A vorgesehen ist. Selbstverständlich ist es auch möglich, diese Thermosyphon-Leitungssysteme in einem gemeinsamen Leitungssystem mit nur einem Kondensator und je einem Verdampfer auf jeder Stirnseite zusammenzufassen. Ein entsprechendes Ausführungsbeispiel geht aus Figur 4 hervor. Die dort allgemein mit 39 bezeichnete elektrische Maschine umfasst wiederum wie bei der Ausführungsform nach Figur 3 einen ersten, dem Wickelkopf 6a, 6a' auf der einen Stirnseite zugeordneten Verdampfer 22A sowie einen zweiten, dem Wickelkopf 6b, 6b' auf der anderen Stirnseite zugeordneten Verdampfer 32A. Bei dem allgemein mit 40 bezeichneten Thermosyphon-Leitungssystem der Maschine 39 sind jedoch beide Verdampfer über mindestens eine untere, geodätisch auf niedrigerem Niveau liegende Sammelleitung 41 für kondensiertes Kältemittel k_{f} und über mindestens eine obere, geodätisch auf vergleichsweise höherem Niveau liegende Sammelleitung 42 für verdampftes Kältemittel k_{g} miteinander verbunden. Dabei führt die Sammelleitung 41 zu den unteren Teilen der Verdampfer 22A und 22B im Bereich der Wickelkopfteile 6a' bzw. 6b'. In entsprechender Weise führt die Sammelleitung 42 von den oberen Teilen der Verdampfer 22A und 22B im Bereich der Wickelkopfteile 6a bzw. 6b weg. Die Sammelleitungen können jeweils längs des Maschinengehäuses 8 z.B. in einem Rippenkanal geführt werden. Sie werden oben und unten über entsprechende Verbindungsrohre 33 bzw. 34 zu einem Kondensator 43 geführt, der stirnseitig vor einem Lüfterrad 16 angeordnet ist. Der Kondensator lässt sich so in ein verlängertes Lüfter- oder Gebläsegehäuse 15 integrieren und ist damit gegen äußere mechanische Beschädigungen geschützt. Die Strömungsführung für einen Luftstrom 26 an Kühlluft kann saugend oder, falls der Kondensator vor dem Lüfterrad angeordnet wird, drückend sein.

Selbstverständlich kann nicht nur bei dieser Ausführungsform der Maschine eine andere Anordnung des mindestens einen Kondensators 43 vorgesehen werden. So kann sich der Kondensator außerhalb des Maschinengehäuses 8 befinden entsprechend dem Kondensator 21 nach den Figuren 1 bis 3. Oder er hat eine Spiralform mit sich axial erstreckender Spiralachse gemäß dem Kondensator 31, wie er in den Figuren 1 und 3 gezeigt ist. Auch eine Anordnung außen vor oder an einem der Lagerschilde bzw. -gehäusedeckel 11a, 11b in einem Luftstrom ist möglich. Selbstverständlich lässt sich auch eine Kombination mehrerer dieser Anordnungsmöglichkeiten von mehreren Kondensatoren für ein Thermosyphon-Leitungssystem vorsehen.

Abweichend von der in Figur 4 gezeigten Ausführungsform der Maschine 39 wie auch von den in den Figuren 1 bis 3 gezeigten Ausführungsformen kann sich der mindestens eine Verdampfer gegebenenfalls auch in einem Zwischenraum zwischen mindestens einem Wickelkopf und dem Außengehäuse befinden. Eine entsprechende Ausführungsform ist in Figur 5 angedeutet. Bei der dort gezeigten, allgemein mit 44 bezeichneten Maschine ist wiederum ein Thermosyphon-Leitungssystem 45 mit einer Flüssigkeitssammelleitung 41 und einer Gassammelleitung 42 vorgesehen. Diese Leitungen sind mit Verdampfern 22B und 32B verbunden, die jeweils auf der radial außenliegenden Seite der Wickelköpfe 6a, 6a' bzw. 6b, 6b' in wärmeleitender Verbindung mit diesen angeordnet sind. Ein Kondensator 46 des Thermosyphon-Leitungssystems 45 befindet sich auf der Nicht-Antriebsseite NS an der Stirnseite des Maschinengehäuses 8, z.B. direkt an dessen Gehäusedeckel 11b. Zur Verbesserung des Wärmeaustauschs ist der Kondensator noch mit sich achsenparallel erstreckenden Kühlrippen 47 ausgestattet, die sich in dem Luftstrom eines Lüfterrades 16 innerhalb eines Gebläsegehäuses 15 befinden.

Eine weitere Möglichkeit (nicht Teil der Erfindung) wie sie in Figur 6 an einer Maschine 49 veranschaulicht ist, besteht darin, in den Gehäuseinnenräumen 19a und 19b vorgesehene Verdampfer 51 und 52 von Thermosyphon-Leitungssystemen 53 und 54 direkt in die jeweiligen stirnseitigen Gehäuseteile bzw. -deckel, die auch als die Lagerschilde 11a und 11b ausgebildet sind, zu integrieren oder anderweitig wärmeleitend mit diesen zu verbinden. Da hier die Verluste von dem jeweiligen Thermosyphon-Leitungssystem über den verhältnismäßig großflächigen Deckel direkt aufgenommen und abgeführt werden, besteht für die Lager 10a bzw. 10b keine Überhitzungsgefahr.

Wie bereits erwähnt, kann insbesondere jeder Verdampfer mit den Wärmeaustausch fördernden zusätzlichen Flächenteilen wie z.B. Kühlrippen ausgestattet werden. Diese Flächenteile lassen sich auch so ausführen, dass mit ihnen eine Wärmeaufnahme aus dem Bereich der Läuferwelle verbessert wird. Ein entsprechendes Ausführungsbeispiel ist in Figur 7 angedeutet, wobei dort nur ein Ausschnitt einer elektrischen Maschine auf deren Antriebsseite gezeigt ist. Für diese Maschine kann beispielsweise ein Thermosyphon-Leitungssystem 40 gemäß Figur 4 vorgesehen sein. Wie aus Figur 7 hervorgeht, sind an einem Verdampfer 22A und an einer Läuferwelle 9 im Wesentlichen scheibenförmige Wärmeleitkörper 56 bzw. 57 angebracht. Diese Wärmeleitkörper greifen mit sich axial erstreckenden, rohr- oder ringförmigen Fortsätzen 56a bzw. 57a berührungslos und kammartig ineinander. Auf diese Weise wird nicht nur die Wärmeaustauschfläche des Verdampfers vergrößert; sondern es wird auch über die Wärmeleitkörper von dem Wickelkopf 6a, 6a' eine thermische Kopplung zu der Läuferwelle 9 und zu mit ihr thermisch verbundenen Teilen wie einer Läuferwicklung oder einem Läuferblechpaket 4 erreicht. D.h., der thermische Widerstand bzw. der Temperaturunterschied zwischen der Welle und dem jeweiligen Wickelkopf lässt sich so vorteilhaft reduzieren. Selbstverständlich können auch an der gegenüberliegenden , in der Figur nicht ausgeführten Nicht-Antriebsseite der Maschine entsprechende Maßnahmen zur Verbesserung des Wärmeaustauschs ergriffen werden.

## Patentansprüche

1. Elektrische Maschine
- mit einem drehbar gelagerten Läufer und einem zugeordneten, ortsfesten Ständer in einem Maschinengehäuse sowie
- mit einer Einrichtung zur Kühlung von Teilen innerhalb des Maschinengehäuses, die an wenigstens einer Stirnseite des Maschinengehäuses (8) ein geschlossenes Leitungssystem (20, 30, 30A, 40, 45, 53, 54) enthält, das zumindest
• einen innerhalb des Maschinengehäuses befindlichen Verdampfer (22, 22A, 32, 32A, 51, 52),
• einen außerhalb des Maschinengehäuses befindlichen, gegenüber dem Verdampfer geodätisch höher liegenden Kondensator (21, 31, 43, 46)
und
• zwischen dem Kondensator und dem Verdampfer verlaufende verbindungsrohre (23, 24, 33, 34)
aufweist und in dem eine Zirkulation in einem geschlossenen Kreislauf eines Kältemittels (k_{f}, k_{g}) nach einem Thermosyphon-Effekt auf Grund von Dichteunterschieden zwischen Dampf (k_{g}) und Flüssigkeit (k_{f}) des Kältemittels erfolgt, wobei in dem Leitungssystem ein Flüssigkeits-Dampfgemisch des Kältemittels gesättigt ist,
**dadurch gekennzeichnet, dass** das für die Zuleitung des Kältemittels (k_{f}) hin zu dem Verdampfer (22, 22A, 32, 32A, 51, 52) dienende Verbindungsrohr (23, 33) einen kleineren Rohrquerschnitt aufweist als das für die Ableitung des Kältemittels (k_{g}) weg von dem Verdampfer dienende Verbindungsrohr (24, 34) und der mindestens eine Verdampfer (22A, 32A) in unmittelbarer wärmeleitender Verbindung mit wenigstens einem der stirnseitigen Wickelköpfe (6a, 6a' bzw. 6b, 6b') einer Ständerwicklung steht.

2. Maschine nach Anspruch 1, **dadurch gekennzeichnet, dass** an beiden Stirnseiten des Maschinengehäuses (8) jeweils ein Thermosyphon-Leitungssystem (20, 20A, 53 bzw. 30, 30A, 54) vorgesehen ist.

3. Maschine nach Anspruch 1, **dadurch gekennzeichnet, dass** an beiden Stirnseiten des Maschinengehäuses (8) jeweils ein Verdampfer (22A, 22B, 32A, 32B) eines gemeinsamen Thermosyphon-Leitungssystems (40, 45) vorgesehen ist.

4. Maschine nach einem der vorangehenden Ansprüche, **dadurch gekennzeichnet, dass** der mindestens eine Verdampfer (22, 22A, 22B, 32, 32A, 32B, 51, 52) und/oder der mindestens eine Kondensator (21, 31, 43, 46) mit Maßnahmen zur Vergrößerung der Wärmeübertragungsfläche ausgestattet sind/ist.

5. Maschine nach Anspruch 4, **dadurch gekennzeichnet, dass** der mindestens eine Kondensator (21, 31, 43, 46) als Kühlschlange gestaltet und/oder mit Kühlrippen (35, 47) versehen ist.

6. Maschine nach Anspruch 4, **dadurch gekennzeichnet, dass** der mindestens eine Verdampfer (22, 22A, 22B, 32, 32A, 32B, 51, 52) mit Kühlrippen (36, 38a, 38b) versehen ist.

7. Maschine nach einem der Ansprüche 1 bis 6, **dadurch gekennzeichnet, dass** der mindestens eine Verdampfer (51, 52) in einen stirnseitigen Gehäusedeckel (11a, 11b) des Maschinengehäuses (8) integriert oder mit diesem anderweitig wärmeleitend verbunden ist.

8. Maschine nach einem der vorangehenden Ansprüche, **dadurch gekennzeichnet, dass** die Kühleinrichtung zusätzlich Strömungswege für eine Luftkühlung aufweist.

9. Maschine nach Anspruch 8, **dadurch gekennzeichnet, dass** eine Außenkühlung des Maschinengehäuses (8) mittels eines Luftstroms (17, 26) vorgesehen ist, der von einem stirnseitigen Gebläse hervorgerufen ist.

10. Maschine nach Anspruch 9, **dadurch gekennzeichnet, dass** in dem Luftstrom (17, 26) der mindestens eine Kondensator. (31, 43, 46) eines Thermosyphon-Leitungssystems (30, 40, 45) angeordnet ist.

## Claims

1. Electrical machine
- comprising a rotatably mounted armature and an assigned, fixed stator in a machine housing as well as
- comprising a facility for cooling parts within the machine housing, which, on at least one front face of the machine housing (8), contains a closed line system (20, 30, 30A, 40, 45, 53, 54), which has at least
• one evaporator (22, 22A, 32, 32A, 51, 52) arranged within the machine housing,
• one condenser (21, 31, 43, 46) arranged outside the machine housing and geodetically higher than the evaporator
and
• connecting tubes (23, 24, 33, 34) running between the condenser and the evaporator
and in which a circulation of a refrigerant (*k_{f}*,*k_{g}*) in a closed circuit occurs by means of a thermosyphon effect on the basis of density differences between steam (*k_{g}*) and liquid (*k_{f}*) of the refrigerant,
with a liquid/steam mixture of the refrigerant being saturated in the line system,
**characterized in that**
the connecting tube (23, 33) used to supply the refrigerant (*k_{f}*) to the evaporator (22, 22A, 32, 32A, 51, 52) has a smaller tubular cross-section than the connecting tube (24, 34) used to drain the refrigerant (*k_{g}*) away from the evaporator and the at least one evaporator (22A, 32A) has a direct heat-conducting connection to at least one of the coil ends (6a, 6a' and/or 6b, 6b') of a stator coil on the front face.

2. Machine according to claim 1, **characterised in that** a thermosyphon line system (20, 20A, 53 and/or 30, 30A, 54) is provided on both front faces of the machine housing (8) in each instance.

3. Machine according to claim 1, **characterised in that** an evaporator (22A, 22B, 32A, 32B) of a common thermosyphon line system (40, 45) is provided on both front faces of the machine housing (8) in each instance.

4. Machine according to one of the preceding claims, **characterized in that** the at least one evaporator (22, 22A, 22B, 32, 32A, 32B, 51, 52) and/or the at least one condenser (21, 31, 43, 46) are/is equipped with provisions for increasing the heat transfer surface.

5. Machine according to claim 4, **characterized in that** the at least one condenser (21, 31, 43, 46) is designed as a cooling coil and/or is provided with cooling fins (35, 47).

6. Machine according to claim 4, **characterized in that** the at least one evaporator (22, 22A, 22B, 32A, 32B, 51, 52) is provided with cooling fins (36, 38a, 38b).

7. Machine according to one of claims 1 to 6, **characterized in that** the at least one evaporator (51, 52) is integrated in a housing cover (11a, 11b) of the machine housing (8) on the front face or is otherwise connected hereto in a heat conducting manner.

8. Machine according to one of the preceding claims, **characterized in that** the cooling facility also has melt flow paths for an air cooling.

9. Machine according to claim 8, **characterized in that** a surface cooling of the machine housing (8) is provided by means of an air flow (17, 26), which is produced by a fan on the front face.

10. Machine according to claim 9, **characterized in that** the at least one condenser (31, 43, 46) of a thermosyphon line system (30, 40, 45) is arranged in the air flow (17, 26).

## Revendications

1. Machine électrique
- ayant un rotor monté tournant et un stator associé fixe dans un carter de machine,
ainsi que
- ayant un dispositif de refroidissement de parties à l'intérieur du carter de la machine, qui comporte, sur au moins un côté frontal du carter ( 8 ) de la machine, un système ( 20, 30, 30A, 40, 45, 53, 54 ) fermé de conduite, qui a au moins
• un évaporateur ( 22, 22A, 32, 32A, 51, 52 ) se trouvant à l'intérieur du carter de la machine,
• un condenseur ( 21, 31, 43, 46 ) se trouvant à l'extérieur du carter de la machine et plus haut géodésiquement que l'évaporateur
et
• un tuyau ( 23, 24, 33, 34 ) de liaison s'étendant entre le condenseur et l'évaporateur,
et dans lequel il s'effectue une circulation dans un circuit fermé d'un fluide ( k_{f}, k_{g} ) réfrigérant suivant un effet de thermosiphon en raison de différences de masse volumique entre la vapeur ( k_{g} ) et le liquide ( k_{f} ) du fluide réfrigérant,
dans lequel dans le système de conduite un mélange liquide-vapeur du fluide réfrigérant est saturé,
**caractérisée en ce que** le tuyau ( 23, 33 ) de liaison servant à amener le fluide ( k_{f} ) réfrigérant à l'évaporateur ( 22, 22A, 32, 32A, 51, 52 ) a une section transversale plus petite que le tuyau ( 24, 34 ) de liaison servant à évacuer le fluide ( k_{g} ) réfrigérant de l'évaporateur et le au moins un évaporateur ( 22A, 32A ) est en liaison conductrice de la chaleur directe avec au moins une tête ( 6a, 6a' ou 6b, 6b' ) d'enroulement du côté frontal d'un enroulement de stator.

2. Machine suivant la revendication 1, **caractérisée en ce qu'**il est prévu respectivement un système ( 20, 20A, 53 ou 30, 30A, 54 ) de conduite à thermosiphon des deux côtés frontaux du carter ( 8 ) de la machine.

3. Machine suivant la revendication 1, **caractérisée en ce qu'**il est prévu respectivement un évaporateur ( 22A 22B, 32A, 32B ) d'un système ( 40, 45 ) de conduite à thermosiphon commun des deux côtés frontaux du carter ( 8 ) de la machine.

4. Machine suivant l'une des revendications précédentes, **caractérisée en ce qu'**au moins un évaporateur ( 22, 22A, 22B, 32, 32A, 32B, 51, 52 ) et/ou le au moins un condenseur ( 21, 31, 43, 46 ) est/sont équipés de mesures pour l'agrandissement de la surface de transmission de la chaleur.

5. Machine suivant la revendication 4, **caractérisée en ce qu'**au moins un condenseur ( 21, 31, 43, 46 ) est conformé en serpentin de refroidissement et/ou est pourvu d'ailettes ( 35, 47 ) de refroidissement.

6. Machine suivant la revendication 4, **caractérisée en ce que** le au moins un évaporateur ( 22, 22A, 22B, 32, 32A, 32B, 51, 52 ) est muni d'ailettes ( 36, 38a, 38b ) de refroidissement.

7. Machine suivant l'une des revendications 1 à 6, **caractérisée en ce que** le au moins un évaporateur ( 51, 52 ) est intégré dans un couvercle ( 11a, 11b ) du côté frontal du carter ( 8 ) de la machine ou est relié à celui-ci d'une manière conductrice de la chaleur d'une autre façon.

8. Machine suivant l'une des revendications précédentes, **caractérisée en ce que** le dispositif de refroidissement a en plus des voies de passage d'un refroidissement par de l'air.

9. Machine suivant la revendication 8, **caractérisée en ce qu'**il est prévu un prévu un refroidissement extérieur du carter ( 8 ) de la machine au moyen d'un courant ( 17, 26 ) d'air, qui est provoqué par une soufflante du côté frontal.

10. Machine suivant la revendication 9, **caractérisée en ce qu'**un système ( 30, 40, 45 ) de conduite à thermosiphon est disposé dans le courant ( 17, 26 ) d'air du au moins un condenseur ( 31, 43, 46 ).
